# EUROPEAN PATENT APPLICATION

(11) **EP 1 688 273 A1**
(43) Date of publication of application: **09.08.2006**
(21) Application number: 04425917.4
(22) Date of filing: 14.12.2004
(51) Int. Cl.: B60C 3/02, B60C 9/18, B60C 19/12

(54) **A tubular tyre, particularly for bicycles, with a reinforced carcass**

(71) Applicant: Vittoria S.p.A., 24040 Madone (Bergamo) (IT)
(72) Inventor: Campagne, Adrien Jules Hubert Rudie, 24040 Madone (BG) (IT)
(74) Representative: Perani, Aurelio

(57) **Abstract**

A tubular tyre, particularly suitable for bicycle wheels, which is formed by a carcass (1) with a cross-section that is closed by a seam line (2) which extends around the circumference of the tyre, the carcass defining an outer surface (1a) and an inner surface (1b), an inner tube (3) disposed inside the carcass (1), a tread (4) fixed to a peripheral portion of the outer surface of the carcass (1) in a position diametrally opposite the seam line (2), carcass edges (6, 7) which extend from the seam line (2) on each side thereof, as well as a covering strip (8) which is disposed over the seam line (2) and over the carcass edges (6, 7), the covering strip (8) being fixed to the carcass (1).

The carcass (1) is provided with a reinforcing layer (5) fixed to the inner surface (1b) in the region underlying the tread (4) and the carcass edges (6, 7) at the sides of the seam line (2) are folded onto the outer surface (1a) of the carcass.

## Description

The present invention relates to a tubular tyre, particularly suitable for bicycle wheels, which is formed by a carcass with a cross-section that is closed by a seam line which extends around the circumference of the tyre, the carcass defining an outer surface and an inner surface, an inner tube disposed inside the carcass, a tread fixed to a peripheral portion of the outer surface of the carcass in a position diametrally opposite the seam line, carcass edges which extend from the seam line on each side thereof, as well as a covering strip which is disposed over the seam line and over the carcass edges, the covering strip being fixed to the carcass.

Tubular tyres of the above-mentioned type are known in the art and are intended particularly for road or track racing cycles.

They are produced with treads that are composed of natural rubber mixtures or of synthetic elastomer mixtures with or without the addition of quantities of natural and/or synthetic rubber which vary according to the particular conditions of use of the tyre.

For road use, it is known that the ground conditions greatly affect the life of the tyre since it is susceptible to unexpected punctures or cuts which, for the type of tubular tyre in question, necessitate its replacement.

In fact, repairs of punctures undergone by a tyre or by its inner tube are difficult and expensive to carry out, to the point that they are not normally performed and the punctured or cut tyre is discarded.

This leads to the need for the cyclist to carry at least one spare tyre with him, for safety.

The object of the present invention is to remedy the situations indicated above by proposing a tubular tyre which has greater resistance to cuts and punctures so that it can offer an improved working life in comparison with the prior art.

This object is achieved by a tubular tyre, particularly suitable for bicycle wheels, which is characterized in accordance with appended Claim 1.

The invention will now be described in greater detail with reference to a practical embodiment which is given purely by way of non-limiting indication and is illustrated in the appended drawings, in which:

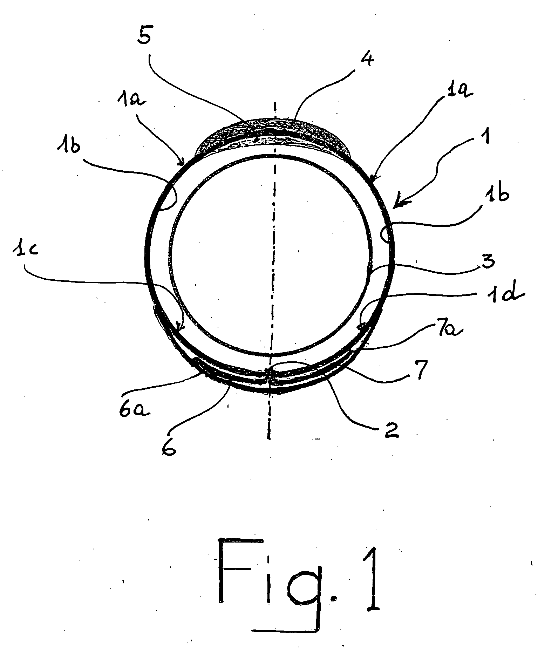

Figure 1 shows a schematic view of the cross-section of the tubular tyre with its inner tube according to the invention.

With reference to the above-mentioned drawing, the carcass of the tubular tyre is generally indicated 1. The carcass is constituted by a laminar element which is bent so as to adopt a toroidal configuration and is sewn along a seam line 2 which extends circumferentially.

According to the prior art specific to tubular tyres, the carcass 1 houses an inflatable inner tube 3 which is inserted prior to the formation of the seam 2 and can be inflated in known manner through a conventional valve, not shown in the drawing.

A tread 4, which may be of any type suitable for the type of use of the tubular tyre, is fixed to the outer surface 1a of the carcass 1 in a position diametrally opposite the seam line 2.

The tread 4 is normally composed of natural rubber mixtures or synthetic elastomer mixtures with or without the addition of quantities of natural and/or synthetic rubber which vary according to the particular conditions of use of the tyre.

According to the invention, a reinforcing layer 5 is provided on the inner surface 1b of the carcass 1 in a position opposite the tread 4.

This reinforcing layer 5, which is made of elastomeric material that is particularly compact and resistant to punctures, preferably extends on a region corresponding to the region covered by the tread 4 although a smaller or larger extent towards the side walls 1c and 1d of the tyre may be provided for.

Also according to the invention, the edges 6 and 7 of the carcass which extend at the sides of the seam line 2 are folded onto the outer surface 1a of the carcass 1 and extend with respective portions 6a and 7a having lengths of at least 12 mm each and in any case sufficient to cover a portion of the side walls 1c and 1d of the tyre.

The assembly formed by the seam line 2 and by the carcass edges 6 and 7 with the respective lateral extensions 6a and 7a is covered by a covering strip 8 which comprises a fabric of cotton threads in which the density of the threads is between 950 and 1050 threads/cm² and the weight is between 0.019 g/cm² and 0.026 g/cm².

The strip 8 is fixed in conventional manner, for example, by gluing, to the edges 6 and 7 and optionally also to the outer surface 1a of the carcass 1 if the strip 8 is to extend beyond the length of the edge portions 6a and 7a.

The thickness of the covering strip 8 is preferably between 0.20 mm and 0.30 mm, preferably 0.25 mm so as to be able to provide proper protection for the seam line but at the same time to have a limited weight such as to compensate for the increase in the weight of the tyre due to the presence of the reinforcing layer 5.

In particular, the covering strip 8 has an overall width no less than 28 mm so as to cover at least a portion of the side walls 1c and 1d of the tyre and to confer thereon considerably improved resistance to lateral punctures in comparison with the tubular tyres of the prior art.

The dimensional values and the materials may, however, vary whilst remaining within the scope of protection of the invention as described above and claimed below.

## Claims

1. A tubular tyre, particularly suitable for bicycle wheels, which is formed by a carcass (1) with a cross-section that is closed by a seam line (2) which extends around the circumference of the tyre, the carcass defining an outer surface (1a) and an inner surface (1b), an inner tube (3) disposed inside the carcass (1), a tread (4) fixed to a peripheral portion of the outer surface of the carcass (1) in a position diametrally opposite the seam line (2), carcass edges (6, 7) which extend from the seam line (2) on each side thereof, as well as a covering strip (8) which is disposed over the seam line (2) and over the carcass edges (6, 7), the covering strip (8) being fixed to the carcass (1), **characterized in that** the carcass (1) is provided with a reinforcing layer (5) fixed to the inner surface (lb) in the region underlying the tread (4) and **in that** the carcass edges (6, 7) at the sides of the seam line (2) are folded onto the outer surface (1a) of the carcass.

2. A tubular tyre according to Claim 1, **characterized in that** the carcass edges (6, 7) are folded in opposite directions relative to the seam line (2).

3. A tubular tyre according to Claims 1 and 2, **characterized in that** each of the carcass edges (6, 7) disposed beside the seam line (2) extends on the outer surface (1a) of the carcass (1) for a distance equal to at least 12 mm starting from the seam line (2).

4. A tubular tyre according to any one of Claims 1 to 3, **characterized in that** the reinforcing layer (5) fixed to the inner surface (lb) of the carcass (1) extends over an area corresponding to that occupied by the tread (4) disposed on the outer surface (1a) of the carcass.

5. A tubular tyre according to any one of Claims 1 to 3, **characterized in that** the reinforcing layer (5) fixed to the inner surface (1b) of the carcass (1) extends over an area less than that occupied by the tread (4) disposed on the outer surface (1a) of the carcass.

6. A tubular tyre according to any one of Claims 1 to 3, **characterized in that** the reinforcing layer (5) fixed to the inner surface (1b) of the carcass (1) extends over an area greater than that occupied by the tread (4) disposed on the outer surface (1a) of the carcass.

7. A tubular tyre according to any one of Claims 1 to 6, **characterized in that** the covering strip (8) extends on each side of the seam line (2) for a distance no less than the length of the underlying carcass edge (6, 7).

8. A tubular tyre according to Claim 7, **characterized in that** the covering strip (8) has an overall width no less than 28 mm.

9. A tubular tyre according to any one of Claims 1 to 8, **characterized in that** the covering strip (8) has a thickness of between 0.20 mm and 0.30 mm.

10. A tubular tyre according to any one of Claims 1 to 9, **characterized in that** the covering strip (8) comprises a fabric of cotton threads with a thread density of between 950 and 1050 threads/cm² and with a weight of between 0.019 g/cm² and 0.026 g/cm².
